# EUROPEAN PATENT APPLICATION

(11) **EP 3 229 059 A1**
(43) Date of publication of application: **11.10.2017**
(21) Application number: 15865042.4
(22) Date of filing: 27.11.2015
(51) Int. Cl.: G02B 27/22, G02B 5/12, G02B 5/30

(54) **FREE-FLOATING IMAGE DISPLAY DEVICE**

(30) Priority: 01.12.2014 JP 2014243131
(71) Applicant: SN Partners L.L.C., Tokyo 162-0805 (JP); Higashiyama Film Co., Ltd., Nagoya-shi, Aichi 463-0002 (JP)
(72) Inventor: YAMAMOTO, Hirotsugu, Saitama-shi, Saitama 336-0016 (JP)
(74) Representative: Betten & Resch
(86) International application number: PCT/JP2015/083456
(87) International publication number: WO 2016/088683

(57) **Abstract**

The purpose of the present invention is to provide an aerial image display device capable of displaying a high-definition aerial image with sufficient luminance. An aerial image display device is provided with an image display device, a half mirror, and a retroreflector. The half mirror is a reflection-type polarizing plate. A λ/4 plate is provided between the reflection-type polarizing plate and the retroreflector. The retroreflector has a polarization-maintaining degree of 50% or more.

## Description

### Technical Field

The present invention relates to an aerial image display device using a retroreflector.

### Background Art

Recently, an aerial image display device which displays an image in the air by forming a display image from an image display device in the air attracts a lot of attention.

An image-forming element is an essential element for an aerial image display device to form an image.

Some types of aerial image display devices, such as an aerial image display device in which a micro mirror image-forming element formed by a micro dihedral corner reflector array is used, an aerial image display device in which a retroreflective image-forming element formed by combining a half mirror and a retroreflector is used, and the like, are proposed (see PTL 1 to PTL 4, for example).

The aerial image display device using micro mirror image-forming element can provide an aerial image with high-definition and high luminance.

However, the problems with the aerial image display device using micro mirror image-forming element are that viewing angle is narrow; the stray light caused by the light reflected an odd number of times can be seen; and further, because hundreds of regular patterns in size of *µ*m unit have to be formed, cost of the image-forming element is very high, and it is difficult to increase the area of the image-forming element.

The aerial image display device using retroreflective image-forming element can solve the aforesaid problems of the aerial image display device using micro mirror image-forming element. However, the problem with the aerial image display device using retroreflective image-forming element is that the luminance of the aerial image formed thereby is low.

To solve such problem, it is proposed that, in the aerial image display device using retroreflective image-forming element, a reflection-type polarizing plate that differentially reflects polarized light is used as the half mirror to improve light utilization efficiency of the aerial image, so as to increase the luminance (see PTL 5 to PTL 6, for example).

### Citation List

### Patent Literature

PTL 1: Japanese Unexamined Patent Application Publication No. S56-158320
PTL 2: Japanese Translation of PCT International Application Publication No. JP-T-S59-500189
PTL 3: WO2007/116639
PTL 4: WO2009/131128
PTL 5: Japanese Translation of PCT International Application Publication No. JP-T-H09-506717
PTL 6: U.S. Patent No. 3620592

### Summary of Invention

### Technical Problem

However, it cannot be said that sufficient luminance of the aerial image of the aerial image display device is achieved in the case where a prism type retroreflector, which is preferably described in PTL 5 and PTL 6, is employed.

The present invention is made to enable an aerial image display device using retroreflector to display a high-definition aerial image with sufficient luminance.

### Solution to Problem

An aerial image display device according to an aspect of the present invention has the following configurations:
[1] An aerial image display device comprises: an image display device; a half mirror; and a retroreflector, wherein the half mirror is a reflection-type polarizing plate, wherein a λ/4 plate is disposed between the reflection-type polarizing plate and the retroreflector, and wherein the retroreflector has a polarization-maintaining degree of 50% or higher.
[2] In the aerial image display device according to configuration [1], the reflectance of the retroreflector is 15% or higher.
[3] In the aerial image display device according to configuration [1] or [2], the light emitted from the image display device is polarized light.
[4] In the aerial image display device according to any one of configurations [1] to [3], a spreading rate α of the retroreflector satisfies α < 1.20%/mm.
[5] In the aerial image display device according to any one of configurations [1] to [4], an absorption-type polarizing plate is provided between the reflection-type polarizing plate and an observer.
[6] In the aerial image display device according to any one of configurations [1] to [5], a depolarization element is provided between the image display device and the half mirror.

### Advantageous Effects of Invention

According to the present invention, it is possible to achieve a high-definition aerial image display device, in an aerial image display device using retroreflector. To be specific, it is possible to achieve an aerial image display device with high luminance by the aforesaid means [1] to [3]. Further, the definition can be improved by the aforesaid means [4]. Further, the contrast can be improved by the aforesaid means [5]. Further, the hue can be improved by the aforesaid means [6].

### Brief Description of Drawings

FIG. 1 is a schematic view showing a general configuration of an aerial image display device according to the present invention;
FIG. 2 is a schematic view showing a general configuration of another aerial image display device according to the present invention;
FIG. 3 is a schematic view showing an embodiment of an aerial image display device provided with a light shielding wall;
FIG. 4 is a schematic view showing another embodiment of the aerial image display device provided with a light shielding wall;
FIG. 5 is a schematic view showing further another embodiment of the aerial image display device provided with a light shielding wall;
FIG. 6 is a schematic view showing an embodiment of an aerial image display device provided with an absorption-type polarizing plate;
FIG. 7 is a schematic view showing an embodiment of an aerial image display device having a depolarization element provided on an image display device thereof;
FIG. 8 is a schematic view showing an optical system for measuring polarization-maintaining degree of a retroreflector;
FIG. 9 is a schematic view showing an optical system for measuring reflectance of a retroreflector;
FIG. 10A and FIG. 10B are schematic views showing an optical system for measuring spreading rate of a retroreflector;
FIG. 11A and FIG. 11B are schematic views showing an example of a retroreflector using microbeads with a refractive index of 2.0; and
FIG. 12 is a schematic view showing a configuration of an aerial image display device in an example of the present invention.

### Description of Embodiments

The details of the present invention will be described below.

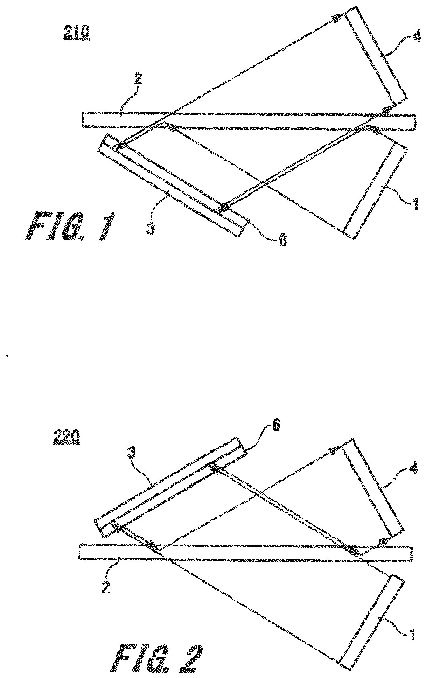

FIG. 1 and FIG. 2 are schematic views (viewed from one side) each showing a general configuration of an aerial image display device according to the present invention.

The aerial image display devices shown in FIG. 1 and FIG. 2 are each provided with an image display device 1, a half mirror 2, a retroreflector 3 and a λ/4 plate 6.

An aerial image display device 210 shown in FIG. 1 has a configuration in which the retroreflector 3 is arranged in a direction in which an image light emitted from the image display device 1 is reflected by the half mirror 2. In the aerial image display device 210 shown in FIG. 1, the image light retroreflected by the retroreflector 3 reaches the half mirror 2 again, and the image light transmitted through the half mirror 2 forms an aerial image 4.

An aerial image display device 220 shown in FIG. 2 has a configuration in which the retroreflector 3 is arranged in a direction in which an image light emitted from the image display device 1 transmits through the half mirror 2. In the aerial image display device 220 shown in FIG.2, the image light retroreflected by the retroreflector reaches the half mirror 2 again, and the image light reflected by the half mirror 2 forms the aerial image 4.

The aerial image 4 is a real image formed at a position plane-symmetrical to the image display device 1 with the half mirror 2 as a symmetry center.

In both the aerial image display devices 210 and 220, the λ/4 plate 6 is arranged on the surface of the retroreflector 3.

In both the aerial image display devices 210 and 220 shown in FIG. 1 and FIG. 2, the half mirror 2 is a reflection-type polarizing plate, and the retroreflector 3 has a polarization-maintaining degree of 50% or higher, preferably 95% or higher.

Since the half mirror 2 is a reflection-type polarizing plate, the λ/4 plate 6 is arranged on the surface of the retroreflector 3, and the retroreflector 3 has a polarization-maintaining degree of 50% or higher, preferably 95% or higher, it is possible to achieve high luminance.

By using a reflection-type polarizing plate as the half mirror 2 and arranging a λ/4 plate 6 on the surface of the retroreflector 3, the polarizing direction of the light irradiated by the image display device 1 and entering the retroreflector 3 through the half mirror 2 is changed by the λ/4 plate 6; therefore, when being incident again on the reflection-type polarizing plate of the half mirror 2, the light with changed polarizing direction can be efficiently polarization-separated from the light irradiated by the image display device 1, so that the luminance of the aerial image can be improved.

Further, if the aerial image display device has a configuration in which the λ/4 plate 6 is bonded to the retroreflector 3 through a transparent adhesive, the reflection on the interface between the retroreflector 3 and the λ/4 plate 6 will be inhibited, so that such a configuration can also lead to improvement of the luminance of the aerial image.

Note that the aerial image display device of the present invention is not necessarily to be limited to a configuration in which the λ/4 plate is arranged on the retroreflector, but also includes a configuration in which the λ/4 plate is interposed between the half mirror and the retroreflector.

The configuration of each component of the aerial image display device according to the present invention will be described below.

### (Half mirror)

A half mirror is an optical element that allows a part of light incident thereon to be reflected thereby and the remaining part to be transmitted therethrough. The luminance of the aerial image can be improved by increasing the product of a normal reflectance Rp and a parallel light transmittance Tp of the half mirror. To be specific, examples the half mirror include a colorless and transparent plate with less absorption, a metal thin-film plate (as a general half mirror), a dielectric multilayer plate (as a general half mirror), and a reflection-type polarizing plate by which two orthogonal polarized lights can be separated from each other.

In the aerial image display device of the present invention, a reflection-type polarizing plate is used as the half mirror.

A reflection-type polarizing plate has a reflective surface and a non-reflective surface. Thus, in the aerial image display device 210 shown in FIG. 1, the reflection-type polarizing plate is arranged so that the reflective surface faces the lower side; and in the aerial image display device 220 shown in FIG. 2, the reflection-type polarizing plate is arranged so that the reflective surface faces the upper side.

Incidentally, in order to prevent warpage or curl of the half mirror, a colorless and transparent plate may be bonded to the reflection-type polarizing plate of the half mirror through a transparent adhesive.

In such a case, the material of the colorless and transparent plate is not particularly limited as long as the material is colorless and transparent; however, it is preferred that the material has small refractive-index anisotropy. More specifically, examples of the colorless and transparent plate include a plastic film, a glass plate and the like, wherein examples of the plastic film include an acrylic film, a polyester film, a polycarbonate film and the like, and examples of the glass plate include an alkali glass, a quartz glass, a chemically strengthened glass, an alumina glass and the like.

Incidentally, in the present invention, the term "half mirror" refers to an optical component having a function of separating the light emitted from the image display device and the light reflected from the retroreflector into different directions.

In the case where a plurality of optical components, each functioning as a half mirror when being used alone, are bonded to each other to form a laminated structure, the aforesaid function of separating the emitted light and the reflected light is achieved by the optical component arranged closest to the image display device, among the plurality of optical components. For example, in the case where a reflection-type polarizing plate and a colorless and transparent plate (which functions as a half mirror) are bonded to each other to form a laminated structure and wherein the reflection-type polarizing plate is arranged on the side of the image display device, since the colorless and transparent plate does not function as a half mirror, the colorless and transparent plate in such a laminated structure will not be called as "half mirror" in the present invention.

### (Reflection-type polarizing plate)

Concrete examples of the reflection-type polarizing plate include a uniaxially stretched dielectric multilayer plate, a wire grid polarizing plate and a cholesteric liquid crystal plate, wherein the uniaxially stretched dielectric multilayer plate and the wire grid polarizing plate are each adapted to separate linearly polarized lights such as P-polarized light and S-polarized light, and the cholesteric liquid crystal plate is adapted to separate circularly polarized lights such as left circularly polarized light and right circularly polarized light. Examples of commercially available uniaxially stretched dielectric multilayer plate include, for example, DBEF (manufactured by 3M Corporation), a polarizing plate with APCF (luminance improving film) (manufactured by Nitto Denko Corporation), and the like. Examples of commercially available wire grid polarizing plate include, for example, WGF (manufactured by ASAHI KASEI E-materials Corporation), ProFluxPPL02 (manufactured by Moxtek, Inc.), and the like. Examples of commercially available cholesteric liquid crystal plate include, for example, NIPOCS APCF (manufactured by Nitto Denko Corporation), and the like.

### (λ/4 plate)

The luminance of the aerial image can be increased by providing a λ/4 plate on the retroreflector. Further, by bonding a λ/4 plate to the retroreflector through a transparent adhesive, reflection on the interface can be reduced, and therefore the luminance can be increased.

Herein, compared to a normal wavelength dispersion type λ/4 plate, a reverse wavelength dispersion type λ/4 plate is preferred since it makes the hue of the aerial image closer to the hue of the image display device than a normal wavelength dispersion type λ/4 plate. Examples of commercially available λ/4 plate include a normal wavelength dispersion type λ/4 plate such as Elmec R140, Elmec R40- # 140 (all manufactured by Kaneka Corporation), Pure Ace GT-138, Pure Ace GR-138, Pure Ace TT-140, Pure Ace GS-120 (all manufactured by Teijin Limited), and a reverse wavelength dispersion type λ/4 plate such as Pure Ace WRS-148, Pure Ace WRW-142(all manufactured by Teijin Limited).

### (Retroreflector)

The retroreflector of the aerial image display device according to the present invention has the same meaning as that of the retroreflector defined in JIS Z 8713: 1995, i.e., a reflector that causes the light reflected therefrom to selectively return almost along the optical path of the light incident thereon.

The retroreflector is widely used as a road marker for maintaining traffic safety and making traffic smooth, or as safety equipment for preventing accidents from occurring during night or in a dark place, and there are various commercially available retroreflectors with different hues, which can be mainly classified into two types, one is a prism type, and the other one is microbead type.

Examples of commercially available prism type retroreflector include Nikkalite Crystal Grade (manufactured by Nippon Carbide Industries Co., Inc.), Diamond Grade DG ultrabright reflective sheet 2090/4090 (manufactured by 3M Corporation), Reflexite 18605 (manufactured by Orafol Co. Ltd.), and the like.

Examples of commercially available microbead type retroreflector include Scotchcal reflective sheet 1570, Scotchcal reflective sheet 680-10/85, Scotchlite high gain 7610, Scotchlite reflective cloth 8910 (all manufactured by 3M Corporation), Kiwalite 19513 (manufactured by Kiwa Chemical Industry Co., Ltd.), Sparklite MR501 (manufactured by Unitika Sparklite Ltd), Sparklite MR718BT (manufactured by Unitika Sparklite Ltd), Reflite 9301 (manufactured by Nihon Reflite Industry Co. Ltd.), Reflite 8318 (manufactured by Nihon Reflite Industry Co. Ltd.), and the like.

Further, by forming the retroreflector in a three-dimensional shape, it will become possible to display a three-dimensional aerial image.

### (Absorption-type polarizing plate)

In the aerial image display device according to the present invention, the contrast of the aerial image can be improved by arranging an absorption-type polarizing plate on the half mirror. Further, by bonding an absorption-type polarizing plate to the half mirror through a transparent adhesive, reflection on the interface can be reduced, and therefore the luminance can be increased.

The contrast may also be improved by providing a ND that simply reduces the amount of light; however, it is more preferable to provide an absorption-type polarizing plate. Examples of commercially available absorption-type polarizing plate include NPF-F1205DU, NPF-FW1225DU, NPF-G1220DUN, NPF-EGW1225DU, NPF-SEG1425DU, NPF-TEG1465DU (all manufactured by Nitto Denko Corporation), SUMIKALAN SR-W842, SUMIKALAN SR-W862A, SUMIKALAN SR-F862 (all manufactured by Sumitomo Chemical Co., Ltd).

It is preferred to use a reflection-type polarizing plate with absorption-type polarizing plate, so that the process for bonding the absorption-type polarizing plate can be omitted. Examples of commercially available reflection-type polarizing plate with absorption-type polarizing plate include a DBEF-Q (manufactured by 3M Corporation), a polarizing plate with APCF (manufactured by Nitto Denko Corporation), a NIPOCS APCF (manufactured by Nitto Denko Corporation), and the like.

However, in the case where an absorption-type polarizing plate is provided, the absorption-type polarizing plate must be arranged on the side of the non-reflective surface of the reflection-type polarizing plate, and a colorless and transparent plate may be provided between the reflection-type polarizing plate and the absorption-type polarizing plate. However, in order to reduce the reflection on the interface to thereby increase the luminance, it is preferred that these components are bonded to each other through a transparent adhesive.

Further, it is necessary to consider the direction of the transmission axis of the absorption-type polarizing plate and the direction of the transmission axis of the reflection-type polarizing plate. In the aerial image display device 210 shown in FIG. 1, it is necessary to arrange the absorption-type polarizing plate and the reflection-type polarizing plate so that the transmission axes thereof are parallel to each other; while in the aerial image display device 220 shown in FIG. 2, it is necessary to arrange the absorption-type polarizing plate and the reflection-type polarizing plate so that the transmission axes thereof are perpendicular to each other.

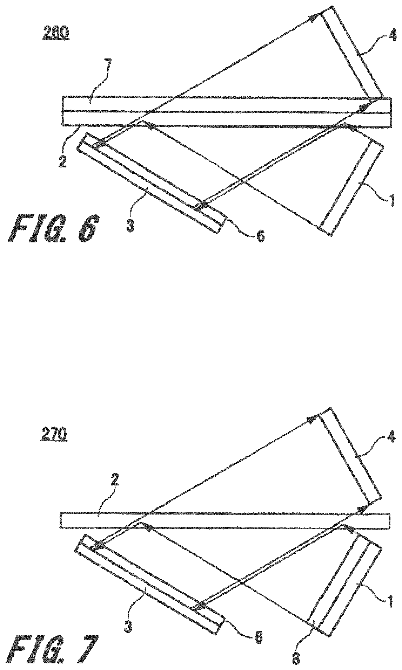

Here, an embodiment in which an absorption-type polarizing plate is provided is shown in FIG. 6.

Compared to the aerial image display device 210 shown in FIG. 1, an aerial image display device 260 shown in FIG. 6 further has an absorption-type polarizing plate 7 arranged on the half mirror 2, which is a reflection-type polarizing plate.

By arranging the absorption-type polarizing plate 7 on the half mirror 2, the light reflected from the retroreflector 3 is transmitted through the absorption-type polarizing plate 7 only once, while external light incident on the half mirror 2 is transmitted through the absorption-type polarizing plate 7 twice. Thus, the external light is remarkably reduced, and therefore the contrast of the light reflected by from the retroreflector 3 can be improved.

Incidentally, the absorption-type polarizing plate can be applied not only to the aerial image display device 210 shown in FIG. 1, but also to other aerial image display devices without departing from the scope of the present invention.

Further, in the aerial image display device according to the present invention, the absorption-type polarizing plate does not have to be arranged on the half mirror. For example, the absorption-type polarizing plate may also be arranged between the half mirror and the observer. However, the absorption-type polarizing plate needs to be arranged in a position so that the external light is transmitted through the absorption-type polarizing plate twice.

### (Light shielding wall)

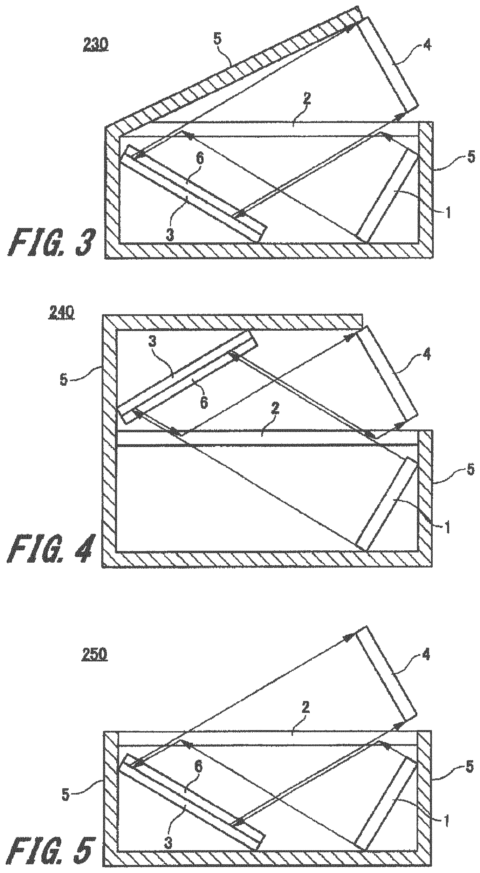

Examples of methods for increasing the contrast of the aerial image include, for example, providing a light shielding wall 5 for shielding external light from entering around formation position of the aerial image, as shown in each of FIGS. 3 to 5.

An aerial image display device 230 shown in FIG. 3 is an embodiment obtained by providing a light shielding wall 5 around the aerial image display device 210 shown in FIG. 1. The side faces of the light shielding wall 5 are vertically formed, the bottom face of the light shielding wall 5 is horizontally formed, and the top face of the light shielding wall 5 is obliquely formed to cover a portion ranging from the half mirror 2 to the aerial image 4 from above.

An aerial image display device 240 shown in FIG. 4 is an embodiment obtained by providing a light shielding wall 5 around the aerial image display device 220 shown in FIG. 2. The side faces of the light shielding wall 5 are vertically formed, the bottom face and the top face of the light shielding wall 5 are horizontally formed, wherein the top face covers a portion ranging from the half mirror 2 to the aerial image 4 from above.

An aerial image display device 250 shown in FIG. 5 is an embodiment obtained by providing a light shielding wall 5 around the aerial image display device 210 shown in FIG. 1. Compared to the aerial image display device 230 shown in FIG. 3, the aerial image display device 250 shown in FIG. 5 has no top face.

Incidentally, the configuration in which an aerial image display device provided with a light shielding wall is not limited to the embodiments shown in FIGS. 3 to 5, but also includes various modifications without departing from the scope of the present invention.

### (Depolarization element)

In the aerial image display device according to the present invention, fluctuation in hue of the aerial image (i.e., rainbow-like unevenness) of the aerial image display device can be inhibited by providing a depolarization element on the image display device. Here, the fluctuation in hue of the aerial image (i.e., rainbow-like unevenness) means a phenomenon in which unevenness of green color and magenta color in the aerial image is caused due to touch sensor film of the image display device. Examples of the image display device to which such phenomenon will occur include iPhone 5S (manufactured by Apple inc.), iPhone 5C (manufactured by Apple inc.), Xperia A2 (manufactured by Sony Ericsson), AQUOSZETASH-04F (manufactured by Sharp Corporation), and the like.

Examples of commercially available depolarization element include, for example, Cosmoshine SRF (manufactured by Toyobo Co., Ltd.), depolarization adhesive (manufactured by Nagase & Co., Ltd.), and the like. In the case where a Cosmoshine SRF (manufactured by Toyobo Co., Ltd.) is used as the depolarization element, by bonding the adhesive to the image display device, reflection on the interface can be reduced, so that luminance can be increased. In the case where a depolarization adhesive (manufactured by Nagase & Co., Ltd.) is used as the depolarization element, it is used by bonding the colorless and transparent plate and the image display device to each other through the depolarization adhesive.

Here, an embodiment in which a depolarization element is provided is shown in FIG. 7.

Compared to the aerial image display device 210 shown in FIG. 1, an aerial image display device 270 shown in FIG. 7 further has a depolarization element 8 arranged on the image display device 1.

By arranging the depolarization element 8 on the image display device 1, the hue of the aerial image can be improved.

Incidentally, the depolarization element can be applied not only to the aerial image display device 210 shown in FIG. 1, but also to other aerial image display devices without departing from the scope of the present invention.

Note that the aerial image display device of the present invention is not necessarily to be limited to a configuration in which the depolarization element is arranged on the image display device, but also includes a configuration in which the depolarization element is interposed between the image display device and the half mirror.

### (Polarization-maintaining degree of retroreflector)

In the aerial image display device according to the present invention, since a reflection-type polarizing plate is used as the half mirror, it is preferred that the retroreflector has a high polarization-maintaining degree to thereby increase the luminance of the aerial image; to be specific, as described above, it is preferred that the retroreflector has a polarization-maintaining degree of 50% or higher, more preferably 95% or higher.

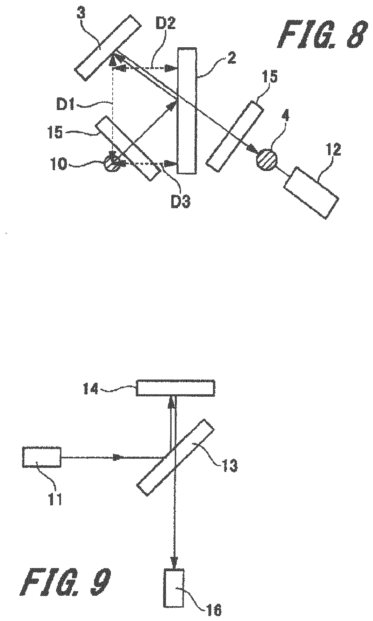

Here, the polarization-maintaining degree of the retroreflector is defined by Ip/(Ic+Ip), wherein Ip and Ic are measured using an optical system shown in FIG. 8 for example.

The optical system shown in FIG. 8 includes an LED light source 10, the half mirror 2, the retroreflector 3, a luminance meter 12, a first absorption-type polarizing plate 15, and a second absorption-type polarizing plate 15, wherein the first absorption-type polarizing plate 15 is disposed between the LED light source 10 and the half mirror 2, and the second absorption-type polarizing plate 15 is disposed between the half mirror 2 and the aerial image 4; a distance D1 between the LED light source 10 and the retroreflector 3 is set to 175 mm, a distance D2 between the retroreflector 3 and the half mirror 2 is set to 75 mm, and a distance D3 between the LED light source 10 and the half mirror 2 is set to 75 mm.

Here, in the optical system shown in FIG. 8, when the two absorption-type polarizing plates 15 are arranged so that the directions of the transmission axes thereof are coincide with each other, the luminance value of the aerial image measured by the luminance meter 12 is Ip; while when the two absorption-type polarizing plates 15 are arranged so that the directions of the transmission axes thereof are perpendicular to each other, the luminance value of the aerial image measured by the luminance meter 12 is Ic.

### (Reflectance of retroreflector)

It is preferred that the retroreflector has a high reflectance to thereby increase the luminance of the aerial image; to be specific, it is preferred that the retroreflector has a reflectance of 15% or higher, more preferably 20% or higher. In order for the aerial image not to become a monochromatic aerial image, it is preferable that the hue of the retroreflector is silver, white or black, it is more preferable more that the hue of the retroreflector is silver or white with high reflectance, and it is most preferable that the hue of the retroreflector is silver with high frontal reflectance.

The reflectance of the retroreflector can be measured using an optical system shown in FIG. 9 for example. The optical system shown in FIG. 9 includes a light source 11, an illuminance meter 16, a beam splitter 13, and a reflector 14; the light emitted from the light source 11 is reflected by the beam splitter 13 and further reflected by the reflector 14, and the light reflected from the reflector 14 is transmitted through the beam splitter 13 and its luminance is measured by the illuminance meter 16.

A reflectance R of the retroreflector is defined by R = Ir × Rm/Im, wherein Im represents a luminance value measured by the optical system shown in FIG. 9 in the case where a mirror is placed as the reflector 14, Ir represents a luminance value measured by the optical system shown in FIG. 9 in the case where a retroreflector is placed as the reflector 14, and Rm represents the absolute reflectance of the mirror.

### (Spreading rate of retroreflector)

In order to achieve a high-definition and high-luminance aerial image, it is generally preferred to use a prism type retroreflector; however, in the present invention, the retroreflector is not selected based on a general perception that a prism type retroreflector can achieve higher definition than a microbead type retroreflector, but is selected based on a confirmed fact that a high-definition aerial image can be achieved by using a retroreflector preferably with a spreading rate of α < 1.20%/mm, and more preferably with a spreading rate of α < 1.00%/mm.

To be specific, examples of commercially available retroreflector with a spreading rate of α < 1.20%/mm include a prism type retroreflector such as Nikkalite Crystal Grade white (manufactured by Nippon Carbide Industries Co., Inc.), Reflexite 18605 (manufactured by Orafol Co. Ltd.) and the like; among these products, the Nikkalite Crystal Grade white (manufactured by Nippon Carbide Industries Co., Inc.) is the most preferable.

### (Retroreflector using microbeads with a refractive index of 2.0)

The definition of the aerial image according to the present invention can be further improved by using a retroreflector using microbeads with a refractive index of about 2.0.

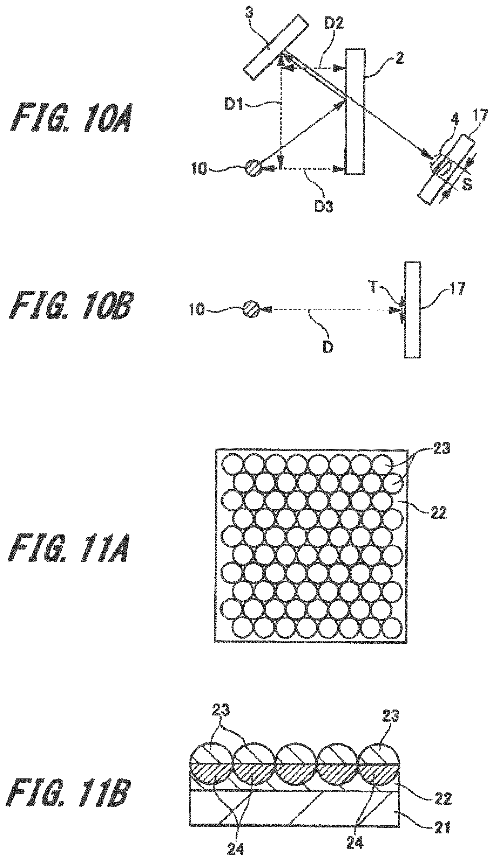

FIG. 11A and FIG. 11B are schematic views showing an example of a retroreflector using microbeads with a refractive index of 2.0; wherein FIG. 11A is a plan view, and FIG. 11B is a cross-sectional view.

As shown in FIG. 11A and FIG. 11B, microbeads 23 with a refractive index of about 2.0 are arranged on a resin layer 22 provided on a substrate 21, wherein the lower portion of the microbeads 23 is embedded in the resin layer 22. As shown in FIG. 11A, the microbeads 23 are arranged in the resin layer 22 so as to have a two-dimensional close-packed structure. Further, as shown in FIG. 11B, the lower portion of the microbeads 23 forms a reflective layer 24.

The microbeads with a refractive index of 2.0 are not particularly limited as long as the microbeads have a refractive index of about 2.0; however, it is preferred that the refractive index of the microbeads is close to 2.0. Concrete examples of commercially available microbeads with a refractive index of 2.0 include microbeads K-PSFn1 with a refractive index of 1.9, microbeads K-PSFn2 with a refractive index of 2.0 (all manufactured by Sumita Optical Glass, Inc.) and the like; among these products, K-PSFn2 is preferable.

Here, the spreading rate α in the present invention is defined by α = S/S0/L0, wherein S, S0, and L0 are measured in the optical system shown in FIG. 10A and FIG. 10B.

The optical system shown in FIG. 10A includes a LED light source 10, a half mirror 2, a retroreflector 3, and a screen 17; a distance D1 between the LED light source 10 and the retroreflector 3 is set to 175 mm, a distance D2 between the retroreflector 3 and the half mirror 2 is set to 75 mm, and a distance D3 between the LED light source 10 and the half mirror 2 is set to 75 mm.

First, S represents the size of the aerial image 4 measured in the optical system shown in FIG. 10A when the screen 17 is place in the position of the aerial image 4.

Next, L0 represents the shortest optical path from the LED light source 10 to the aerial image 4 in the optical system shown in FIG. 10B, and L0 can be calculated by a formula: L0 = (D2 + D3) / cos (arctan (D1 / (D2+D3))). Since D1, D2 and D3 respectively have the aforesaid values, L0 becomes 247 mm.

Finally, S0 represents the size of the LED light source 10; in the optical system shown in FIG. 10B, a size T of the image formed on the screen 17 was measured while changing the distance D between the LED light source 10 and the screen 17, and, when T is linearly approximated with respect to D, a zero intercept extrapolated into distance D=0 is defined as S0.

### (Image display device)

The image display device according to the present invention is a device for displaying video signals of still images or moving images. Examples of the image display device according to the present invention include a cathode ray tube (CRT) display, a liquid crystal display (LCD), a plasma display (PDP), an organic EL display, an LED display, and the like. Particularly, the aerial image display device of the present invention is suitable for displaying a large image, and is considered to be used as an aerial image billboard or the like. It is preferred that an LED display with high luminance, which is easily visible even in an environment where external light is bright, is used as the aerial image billboard. The resolution of the LED is preferably to be applied to usages to be viewed from a distant place, such as a billboard and the like, although the resolution thereof cannot be increased. Further, in recent years, a toy display which uses a personal smartphone or tablet, such as HAKO Vision (manufactured by Bandai Co., Ltd), attracts a lot of attention, and the aerial image display device according to the present invention can also be used for such purpose. In such a case, it is preferred that a LCD or organic EL display, which is widely used in smartphone or tablet, is used as the image display device.

Incidentally, in the aerial image display device according to the present invention, since a reflection-type polarizing plate is used as the half mirror, it is preferred that an image display device whose image light is linearly polarized light or circularly polarized light is selected as the image display device, so that the reflectance Rp of the half mirror can be maximized. Examples of commercially available image display device whose image light is linearly polarized light include Xperia Z2 (manufactured by Sony Ericsson), NEXUS 5 (manufactured by Google) and the like; and examples of commercially available image display device whose image light is circularly polarized light include Galaxy S5 (manufactured by Samsung) and the like.

It is to be understood that the configuration of each component of the aerial image display device and the configuration of each embodiment shown in the drawings can be suitably combined to each other as long as they do not conflict with each other, without departing from the scope of the present invention.

### Examples

The present invention will be further concretely described using the following examples. Note that the materials, configurations, operations shown in the following examples can be suitably varied without departing from the spirit of the present invention. Thus, the scope of the present invention is not limited to the following concrete examples.

### (Measurement of polarization-maintaining degree)

When measuring the polarization-maintaining degree of various kinds of retroreflectors, in the optical system shown in FIG. 8, a shell type green LED with a wavelength of 528 nm was used as the LED light source 10, a plate type B/S50R/50T (manufactured by Edmund Optics Inc.) was used as the half mirror 2, a SPF-30C-32 (manufactured by Sigma Koki Co., Ltd.) was used as each of the two absorption-type polarizing plates 15, and a CS-2000 (manufactured by Konica Minolta Inc.) was used as the luminance meter 12.

### (Measurement of reflectance)

When measuring the reflectance of various kinds of retroreflectors, in the optical system shown in FIG. 9, a red laser 05LHP111 with a wavelength of 632.8 nm (manufactured by Melles Griot Inc.) was used as the He-Ne light source 11, a LX2 (manufactured by Sanwa Electric Instrument Co., Ltd) was used as the illuminance meter 16, a plate type B/S50R/50T (manufactured by Edmund Optics Inc.) was used as the beam splitter 13, and a wideband dielectric mirror BB1-E02 (manufactured by Thorlabs inc.) was used as the mirror. Here, according to the catalog issued by Thorlabs inc., when the wavelength is 632.8, the absolute reflectance Rm of the mirror nm is 99.1%.

### (Measurement of spreading rate)

When measuring the spreading rate of various kinds of retroreflectors, in the optical system shown in FIG. 10A and FIG. 10B, a shell type green LED with a wavelength of 528 nm was used as the LED light source 10, a plate type B/S50R/50T (manufactured by Edmund Optics Inc.) was used as the half mirror 2. Here, the size S0 of the LED light source 10 had been measured and found to be 1.7 mm.

### (Preparation of image display device A)

An image display device A was prepared by bonding a depolarization element Cosmoshine SRF 80 µm (manufactured by Toyobo Co., Ltd.) to an iPhone 5S (manufactured by Apple inc.) through a highly transparent adhesive transfer tape 8172CL (manufactured by 3M Corporation).

### (Preparation of image display device B)

An image display device B was prepared by bonding a SUMIPEX 000 (manufactured by Sumika Acryl Co., Ltd) to an iPhone 5S (manufactured by Apple inc.) through a depolarization adhesive (manufactured by Nagase & Co., Ltd.).

### (Preparation of reflection-type polarizing plate A)

A reflection-type polarizing plate A was prepared by bonding the non-reflective surface of a reflection-type polarizing plate WGF (manufactured by ASAHI KASEI E-materials Corporation) and an absorption-type polarizing plate NPF-SEG1425DU (manufactured by Nitto Denko Corporation) to each other through a highly transparent adhesive transfer tape 8172CL (manufactured by 3M Corporation). Here, the reflection-type polarizing plate WGF and the absorption-type polarizing plate NPF-SEG1425DU were arranged so that the direction of the transmission axis of the reflection-type polarizing plate WGF and the direction of the transmission axis of the absorption-type polarizing plate NPF-SEG1425DU were parallel to each other.

### (Preparation of reflection-type polarizing plate B)

A reflection-type polarizing plate B was prepared by bonding a reflection-type polarizing plate with absorption-type polarizing plate DEBF-Q (manufactured by 3M Corporation) and a SUMIPEX 000 (manufactured by Sumika Acryl Co., Ltd) to each other through a highly transparent adhesive transfer tape 8172CL (manufactured by 3M Corporation), wherein the bonded surface of the DEBF-Q was a surface on the absorption-type polarizing plate side.

### (Preparation of retroreflector A)

168 pieces of glass beads K-PSFn2 (manufactured by Sumita Optical Glass, Inc.), each having a diameter of 2 mm and a refractive index of n=2.0, were washed in an ultrasound bath with acetone for 10 minutes and then with ethanol for 10 minutes, and placed at equal intervals on a glass plate which also had been washed in the same manner as the glass beads. Next, the glass plate having the glass beads placed thereon was set in a vacuum deposition device together with 1 g of aluminum pieces, which had been washed in an ultrasound bath with acetone, and a vacuum of up to 1.8 µTorr was drawn, and then an electric current was passed to deposit aluminum onto one side of the glass beads to form a reflective layer.

A slide glass S1111 (manufactured by Matsunami Glass Industries, Co., Ltd.) was cut into 24 mm, and then washed in an ultrasound bath with acetone for 10 minutes and then with ethanol for 10 minutes; thereafter, a UV-curable optical adhesive NOA61 (manufactured by Norland Products Inc.) was applied to the slide glass to form a thickness of 0.5 mm. Next, the 168 pieces of glass beads having been subjected to the aluminum deposition were laid on the slide glass with the aluminum-deposited side thereof facing downward to become a two-dimensional close-packed structure, and an ultraviolet irradiation device FP-35L having an output of 180 W (manufactured by Vilber Lourmat) was used to irradiate the slide glass and the glass beads to cure the optical adhesive, so that a retroreflector A was prepared.

### (Preparation of retroreflector B)

A retroreflector B was prepared in the same manner as the retroreflector A except that glass beads K-PSFn1 (manufactured by Sumita Optical Glass, Inc.), each having a diameter of 2 mm and a refractive index of n=1.9, were used instead of the glass beads K-PSFn2, each having a diameter of 2 mm and a refractive index of n=2.

### (Example 1)

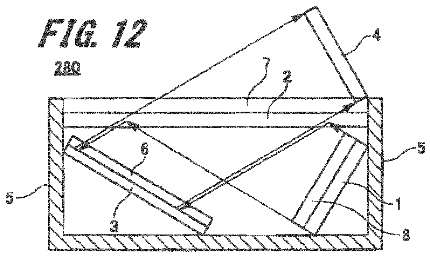

An aerial image display device of Example 1 was prepared by, in the aerial image display device 250 shown in FIG. 5, using an image display device A as the image display device 1, using a reflection-type polarizing plate A as the half mirror 2, using a retroreflector A as the retroreflector 3, and using a λ/4 plate Pure Ace WRW-142 (manufactured by Teijin Limited) as the λ/4 plate 6. Here, the reflection-type polarizing plate A is arranged so that the reflective surface of the reflection-type polarizing plate A faces the side of the iPhone 5S (which is the image display device A), and the reflection axis of the reflection-type polarizing plate A forms an angle of 45° with respect to the slow axis of the λ/4 plate 6. Since the aerial image display device of the present example uses the image display device A and the reflection-type polarizing plate A, it actually has a configuration of an aerial image display device 280 shown in FIG. 12, in which a depolarization element 8 is arranged on an image display device 1, and an absorption-type polarizing plate 7 is formed on the non-reflective surface of the reflection-type polarizing plate of the half mirror 2.

### (Example 2)

An aerial image display device of Example 2 was prepared in the same manner as Example 1 except that a retroreflector B was used as the retroreflector 3.

### (Example 3)

An aerial image display device of Example 3 was prepared in the same manner as Example 1 except that a retroreflector Nikkalite Crystal Grade White (manufactured by Nippon Carbide Industries Co., Inc.) was used as the retroreflector 3.

### (Example 4)

An aerial image display device of Example 4 was prepared in the same manner as Example 1 except that a retroreflector Scotchlite reflective cloth 8910 (manufactured by 3M Corporation) was used as the retroreflector 3.

### (Example 5)

An aerial image display device of Example 5 was prepared in the same manner as Example 1 except that a retroreflector Reflite 9301 (manufactured by Nihon Reflite Industry Co. Ltd.) was used as the retroreflector 3.

### (Comparison 1)

An aerial image display device of Comparison 1 was prepared in the same manner as Example 1 except that a retroreflector Reflexite 18605 (manufactured by Orafol Co. Ltd.) was used as the retroreflector 3.

### (Comparison 2)

An aerial image display device of Comparison 2 was prepared in the same manner as Example 1 except that a retroreflector Kiwalite 19513 (manufactured by Kiwa Chemical Industry Co., Ltd.) was used as the retroreflector 3.

### (Example 6)

An aerial image display device of Example 6 was prepared in the same manner as Example 1 except that a reflection-type polarizing plate WGF (manufactured by ASAHI KASEI E-materials Corporation) was used as the half mirror 2.

### (Example 7)

An aerial image display device of Example 7 was prepared in the same manner as Example 3 except that a reflection-type polarizing plate with absorption-type polarizing plate DBEF-Q (manufactured by 3M Corporation) was used as the half mirror.

### (Example 8)

An aerial image display device of Example 8 was prepared in the same manner as Example 7 except that an image display device B was used instead of the image display device A.

### (Example 9)

An aerial image display device of Example 9 was prepared in the same manner as Example 7 except that an iPhone 5S (manufactured by Apple inc.) was used instead of the image display device A.

### (Example 10)

An aerial image display device of Example 10 was prepared in the same manner as Example 7 except that an Xperia Z2 whose image light is linearly polarized light (manufactured by Sony Ericsson) was used instead of the image display device A.

### (Example 11)

An aerial image display device of Example 11 was prepared in the same manner as Example 10 except that a retroreflector A was used as the retroreflector 3.

### (Observation and evaluation of aerial image)

Observations and evaluations of aerial image (luminance, contrast, image blur, and hue) were performed for each aerial image display device of Examples 1-11 and Comparisons 1-2; further, evaluations of optical characteristics (polarization-maintaining degree, spreading rate, and reflectance) of the retroreflectors used in Examples 1-11 and Comparisons 1-2 were performed.

Criteria for observations and evaluations of the aerial image are indicated in Table 1, and results of observations and evaluations of the aerial image and results of evaluations of optical characteristics of the retroreflectors are indicated in Table 2.

**[Table 1]**

| Evaluation | Observation and evaluation of aerial image | | | |
|---|---|---|---|---|
| | Brightness | Contrast | Image blur | Hue |
| ○○ | Very bright | Very high | Very clear | - |
| ○ | Bright | High | Clear | With no rainbow-like unevenness |
| Δ | No problem | No problem | No problem | With slight rainbow-like unevenness |
| × | Dark | Low | Blurred | - |
| × × | Very dark | Very low | - | - |

**[Table 2]**

| Evaluation results | Optical element | | | | | | Evaluation of optical characteristics of retroreflector | | | | Observation and evaluation of aerial image | | | |
|---|---|---|---|---|---|---|---|---|---|---|---|---|---|---|
| | Image display device | Depolarization element | Half mirror | Absorption-type polarizing plate | Retroreflector | λ/4 Plate | Polarization-maintaining degree | Reflectance | Spreading rate | Type | Brightness | Contrast | Image blur | Hue |
| Example1 | iPhone5S | Cosmoshine SRF | WGF | NPF-SEG1425DU | Retroreflector A | Pure Ace WRW-142 | 100% | 32% | 0.83% | Bead | ○○ | ○○ | ○○ | ○ |
| Example2 | ↓ | ↓ | ↓ | ↓ | Retroreflector B | ↓ | 96% | 21% | 1.19% | Bead | ○ | ○ | ○ | ○ |
| Example3 | ↓ | ↓ | ↓ | ↓ | Nikkalite Crystal | ↓ | 99% | 23% | 0.95% | Prism | ○ | ○ | ○○ | ○ |
| Example4 | ↓ | ↓ | ↓ | ↓ | Scotchlite 8910 | ↓ | 100% | 16% | 1.23% | Bead | ○ | ○ | Δ | ○ |
| Example5 | ↓ | ↓ | ↓ | ↓ | Reflite 9301 | ↓ | 100% | 14% | 1.31% | Bead | Δ | Δ | Δ | ○ |
| Comparison1 | ↓ | ↓ | ↓ | ↓ | Reflexive 18605 | ↓ | 39% | 25% | 1.19% | Prism | × | × | ○ | ○ |
| Comparison2 | ↓ | ↓ | ↓ | ↓ | Kiwalite 19513 | ↓ | 36% | 4% | 1.43% | Bead | × × | × × | × | ○ |
| Example6 | ↓ | ↓ | ↓ | | Nikkalite Crystal | ↓ | 99% | 23% | 0.95% | Prism | ○ | Δ | ○○ | ○ |
| Example7 | ↓ | ↓ | DBEF-Q | | ↓ | ↓ | ↓ | ↓ | ↓ | ↓ | ○ | ○ | ○○ | ○ |
| Example8 | ↓ | Depolarization adhesive | ↓ | | ↓ | ↓ | ↓ | ↓ | ↓ | ↓ | ○ | ○ | ○○ | ○ |
| Example9 | ↓ | - | ↓ | | ↓ | ↓ | ↓ | ↓ | ↓ | ↓ | ○ | ○ | ○○ | Δ |
| Example10 | XperiaZ2 | - | ↓ | | ↓ | ↓ | ↓ | ↓ | ↓ | ↓ | ○○ | ○○ | ○○ | ○ |
| Example11 | ↓ | - | ↓ | | Retroreflector A | ↓ | 100% | 32% | 0.83% | Bead | ○○ | ○○ | ○○ | ○ |

It is known by comparing Examples 1-5 with Comparisons 1-2 that the luminance and contrast of the aerial image can be increased by using a retroreflector having a polarization-maintaining degree of 50% or higher; it is also known by comparing Examples 1-4 with Example 5 that the luminance and contrast of the aerial image can be increased by using a retroreflector having a reflectance of 15% or higher; and it is also known by comparing Example 3 with Example 10 that the luminance and contrast of the aerial image can be increased by letting the light emitted from the image display device to be polarized light.

Further, it is known by comparing Examples 1-5 that the image blur of the aerial image can be inhibited by using a retroreflector having a spreading rate of α < 1.20%/mm.

Further, it is known by comparing Examples 3 and 7 with Example 6 that the contrast of the aerial image can be increased by employing an absorption-type polarizing plate.

Finally, it is known by comparing Examples 7-9 that the hue of the aerial image can be improved by employing a depolarization element.

### Reference Signs List

1 image display device
2 half mirror
3 retroreflector
4 aerial image
5 light shielding wall
6 λ/4 plate
7, 15 absorption-type polarizing plate
8 depolarization element
10 LED light source
11 light source
12 luminance meter
13 beam splitter
14 reflector
16 illuminance meter
17 screen
21 substrate
22 resin layer
23 microbeads
24 reflective layer
210, 220, 230, 240, 250, 260, 270, 280 aerial image display device

## Claims

1. An aerial image display device comprising:
an image display device;
a half mirror; and
a retroreflector,
wherein the half mirror is a reflection-type polarizing plate,
wherein a λ/4 plate is disposed between the reflection-type polarizing plate and the retroreflector, and
wherein the retroreflector has a polarization-maintaining degree of 50% or higher.

2. The aerial image display device according to claim 1, wherein the reflectance of the retroreflector is 15% or higher.

3. The aerial image display device according to claim 1 or 2, wherein the light emitted from the image display device is polarized light.

4. The aerial image display device according to any one of claims 1 to 3, wherein a spreading rate α of the retroreflector satisfies α < 1.20%/mm.

5. The aerial image display device according to any one of claims 1 to 4, wherein an absorption-type polarizing plate is provided between the reflection-type polarizing plate and an observer.

6. The aerial image display device according to any one of claims 1 to 5, wherein a depolarization element is provided between the image display device and the half mirror.
